# EUROPÄISCHE PATENTSCHRIFT

(11) **EP 0 983 893 B1**
(45) Veröffentlichungstag und Bekanntmachung des Hinweises auf die Patenterteilung: **12.12.2001**
(21) Anmeldenummer: 98116509.5
(22) Anmeldetag: 01.09.1998
(51) Int. Cl.: B60K 20/04, F16H 61/22

(54) **Transport -und Einstellsicherung für einen Schalt- bzw. Wählhebel eines Getriebes eines Kraftfahrzeuges**
Securing device for transporting and mounting a shift lever of a gearbox for a motor vehicle.
Dispositif d'immobilisation pour transport et montage d'un levier de commande d'une boîte de vitesses pour un véhicule automobile.

(43) Veröffentlichungstag der Anmeldung: 08.03.2000
(73) Patentinhaber: Ford Global Technologies, Inc., A subsidiary of Ford Motor Company, Dearborn, Michigan 48126 (US)
(72) Erfinder: Oeltjebruns, Thomas, 50259 Pulheim (DE)
(74) Vertreter: Messulam, Alec Moses

(56) Entgegenhaltungen:
- EP-A- 0 476 396
- US-A- 3 665 776

## Beschreibung

Die Erfindung bezieht sich auf eine Transport- und Einstellsicherung für einen Schalt-bzw. Wählhebel eines Getriebes eines Kraftfahrzeuges , der im Oberbegriff des Patentanspruches 1 erläuterten Art.

Aus der EP 0 476 396 A1 ist eine Transport- und Einstellsicherung für Handschalthebel eines Wechselgetriebes, insbesondere für Kraftfahrzeuge bekannt, bei der ein auf ein Teil der Schalthebellagerung aufsetzbares Kunststoffbauteil mit federelastischen Zungen versehen ist, die den Schalthebel in einer bevorzugten Stellung fixieren und arretieren können.

Die bekannte Transport- und Einstellsicherung ist für einen Handschalthebel eines Wechselgetriebes ausgelegt, der während des Transportes und während der Montage des Wechselgetriebes in der bevorzugten Neutral-Stellung fixiert und arretiert ist.

Die Aufgabe der Erfindung ist es, eine Transport- und Einstellsicherung für einen Schalt- bzw. Wählhebel eines Getriebes eines Kraftfahrzeuges, wie z.B. eines automatischen Getriebes zu schaffen, um einerseits den Schalt- bzw. Wählhebel während des Transportes und der Montage der Wählhebellagerung als auch während der Montage des automatischen Getriebes mit der nachfolgenden Verbindung der Wählhebelbaugruppe mit den Verbindungsgestängen zum Getriebe in unterschiedlichen Lagen fixier- und arretierbar ist.

Gemäß der Erfindung wird diese Aufgabe gelöst, indem eine Transport- und Einstellsicherung für einen Schalt- bzw. Wählhebel eines Getriebes eines Kraftfahrzeuges, der im Oberbegriff des Patentanspruches 1 erläuterten Art, die im Kennzeichenteil des Patentanspruches 1 aufgezeigten Merkmale vorgesehen werden.

Dadurch, daß das auf die Wählhebellagerung aufsetzbare Kunststoffbauteil eine erste Raste, die für den Transport der Wählhebelbaugruppe festlegende Stellung aufweist, aus der der Schalt- bzw. Wählhebel in eine zweite Raste, für die die Einstellung bzw. die Verbindung der Wählhebelbaugruppe mit den Verbindungselementen zum Getriebe bevorzugten Stellung überführbar und dort fixier- und arretierbar ist, kann jeweils die für die Montage der Wählhebelbaugruppe günstigste Stellung des Schalt- bzw. Wählhebels zunächst festgelegt werden und daraufhin die für die Herstellung der Verbindung zwischen der Wählhebelbaugruppe und dem Verbindungsgestänge zum Getriebe bevorzugte Stellung eingestellt werden.

Die Erfindung wird anhand eines in den beiliegenden Zeichnungen gezeigten Ausführungsbeispieles näher erläutert. Es zeigt:
- Fig. 1: eine teilweise Schrägrißansicht der Schalt- bzw. Wählhebelbaugruppe mit dem Schalt- bzw. Wählhebel in seiner ersten bevorzugten Stellung;
- Fig. 2: eine teilweise Schrägrißansicht der Schalt- bzw. Wählhebelbaugruppe mit dem Schalt- bzw. Wählhebel in seiner zweiten bevorzugten Stellung und
- Fig. 3 und 4: eine Unteransicht bzw. eine Draufsicht auf das erfindungsgemäße Kunststoffbauteil.

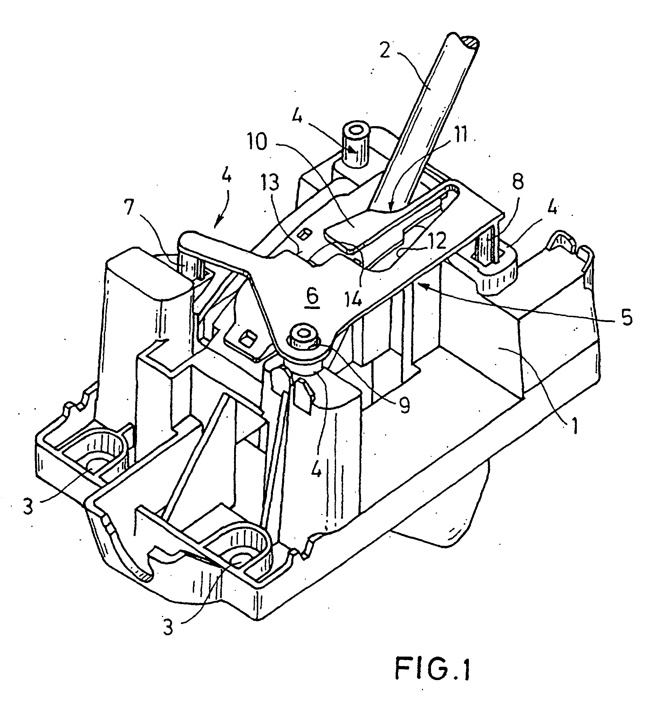

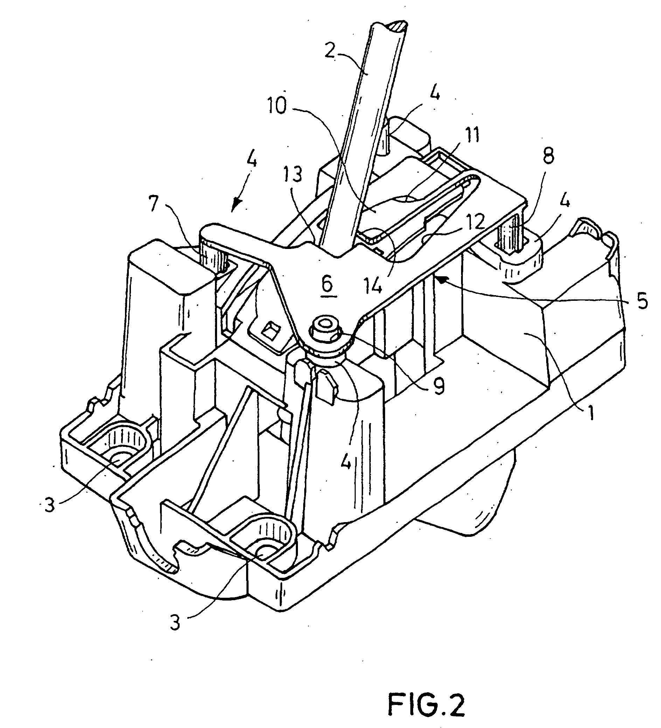

In den Figuren 1 und 2 ist eine Schalt- bzw. Wählhebelbaugruppe mit 1 bezeichnet, in der in einer an sich bekannten, hier nicht im einzelnen dargestellter Weise verschwenkbar gelagerter Schalt- bzw. Wählhebel 2 angeordnet ist.

Diese Schalt- bzw. Wählhebelbaugruppe 1 wird über Befestigungsstellen, von denen zwei mit den Bezugszeichen 3 versehen sind, innerhalb der Karosserie des Kraftfahrzeuges befestigt und weist an ihrer Oberseite Aufnahmen für eine spätere Abdekkung der Schalt- bzw. Wählhebelbaugruppe auf, die mit 4 bezeichnet sind.

Die erfindungsgemäße Transport- und Einstellsicherung ist in Form eines auf die Schalt- bzw. Wählhebelbaugruppe 1 aufsetzbares Kunststoffbauteil 5 ausgebildet, das im wesentlichen aus einer ebenen Grundplatte 6 zwei Befestigungshülsen 7 und 8 und einer Aufnahme 9 besteht.

In der Grundplatte 6 ist eine federnde Zunge 10 freigeschnitten, die an ihrer Außenkontur eine erste Raste 11 für eine erste bevorzugte Stellung aufweist, aus der sie unter elastischer Verformung in eine freigeschnittene Ausnehmung 12 der Grundplatte 6 ein Überführen in eine zweite Raste 13 ermöglicht, in der sie durch eine Sperrkante 14 der zurückfedernden Zunge 10 fixier- und arretierbar ist.

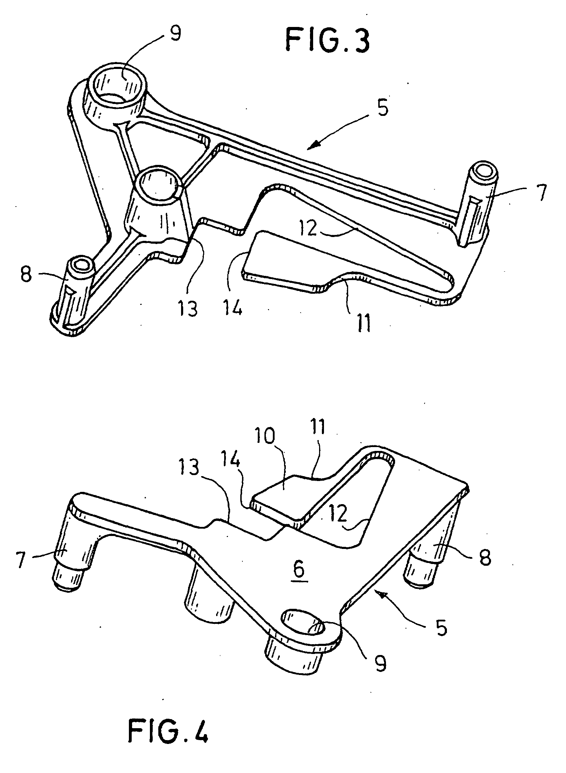

Aus den Figuren 3 und 4, die eine Unteransicht bzw. eine Draufsicht auf die erfindungsgemäße Transport- und Einstellsicherung in Form des Kunststoffbauteiles zeigt, ist dieses Bauteil mit seinen Befestigungsmöglichkeiten und seinen Funktionsteilen klarer zu erfassen.

Bei dem Einbau einer Schalt- bzw. Wählhebelbaugruppe in einem Kraftfahrzeug kann es vorkommen, daß aus einer bestimmten Montageabfolge die Wählhebelbaugruppe vor dem Einbau des Teppichbodens und/oder der Mittelkonsole montiert werden muß, wobei sich aus Platz- oder Montagegründen eine Fixierung des Schalt-bzw. Wählhebels in einer vorderen Position (nahe der Wählhebelstellung P) nicht anbietet, eine solche Stellung aber prozeß- oder getriebeseitig erforderlich sein kann. Ein an sich bekannter Sicherungsclip zum Fixieren des Schalt- bzw. Wählhebels in der Stellung R des Wählhebels konnte, wie gesagt, aus den oben genannten Gründen nicht realisiert werden und gemäß der Erfindung wird der Schalt- Bzw. Wählhebel 2 in der durch die erste Raste 11 fixierten bevorzugten Stellung, die hier der Wählhebelstellung L entspricht, für Montagezwecke leicht fixiert.

Sobald es die Montagereihenfolge erlaubt, kann nunmehr der Schalt- bzw. Wählhebel in die zweite bevorzugte Stellung bewegt und dort fixiert und arretiert werden, die in diesem Falle durch die Raste 13 in Verbindung mit der Sperrkante 14 gebildet wird. Aus dieser zweiten bevorzugten Stellung kann der Schalt- bzw. Wählhebel 2 auch nicht durch Manipulation von unterhalb im Bereich des Schaltgestänges oder Kabels aus dieser Stellung herausbewegt werden.

Die erfindungsgemäße Transport- und Einstellsicherung stellt darüber hinaus sicher, daß der Schalt- bzw. Wählhebel 2 auch nicht in die Stellung P für den Wählhebel gebracht werden kann, da ansonsten hier das vorgesehene Schalt- bzw. Wählhebel-Interlock-System den Schalt- bzw. Wählhebel sperren würde.

Weiterhin soll die erfindungsgemäße Transport- und Einstellsicherung sicherstellen, daß eine Montage der.Schalt- bzw. Wählhebelabdeckung nicht möglich ist, ohne das zuvor der Transport- und Einstellsicherungs-Kunststoffbauteil entfernt wird. Dies wird auf einfache Weise dadurch erreicht, daß die Anordnung des Kunststoffbauteiles 5 unmittelbar in den entsprechenden Aufnahmen erfolgt, die zur Montage der Schalt-bzw. Wählhebelabdeckung zugänglich sein müssen.

## Patentansprüche

1. Transport- und Einstellsicherung für einen Schalt- bzw. Wählhebel (2) eines Getriebes eines Kraftfahrzeuges, bei der ein auf ein Teil der Schalt- bzw. Wählhebelbaugruppe (2) aufsetzbarer Kunststoffbauteil (5) über zumindest eine federelastische Zunge (10) den Schalt- bzw. Wählhebel (2) in einer bevorzugten Stellung fixiert bzw. arretiert,
**dadurch gekennzeichnet, daß**
- das auf die Schalt- bzw. Wählhebelbaugruppe (1) aufsetzbare Kunststoffbauteil (5) eine erste Raste (11) aufweist, die für den Transport und Montage der Wählhebelbaugruppe (1) bevorzugt wird und aus dieser der Schalt- bzw. Wählhebel (2) in eine zweite Raste (13) überführbar ist, die für eine Einstellung bzw. die Verbindung der Wählhebelbaugruppe (2) mit dem Verbindungselementen zum Getriebe bevorzugt wird und dort fixier- und arretierbar ist.

2. Transport- und Einstellsicherung für einen Schalt- bzw. Wählhebel eines Getriebes eines Kraftfahrzeuges nach Anspruch 1,
**dadurch gekennzeichnet, daß**
- das Kunststoffbauteil (5) im wesentlichen aus einer Grundplatte (6) besteht, an der zwei Aufnahmestifte (7 und 8) bzw. eine Aufnahmeöffnung (9) angeordnet sind, die unmittelbar mit Aufnahmen zusammenwirken, die zur Montage einer Abdeckung der Schalt- bzw. Wählhebelbaugruppe (2) vorgesehen sind und
- in der Grundplatte eine federnde Zunge (10) benachbart einer freigeschnittenen Ausnehmung (12) angeordnet ist, die eine erste Raste (11) für eine erste bevorzugte Stellung und wobei an der Grundplatte (6) eine zweite Raste (13) für eine zweite bevorzugte Stellung vorgesehen ist und eine Rastkante (14) an der federnden Zunge (10) nach Erreichen der zweiten Raste (13) den Schalt- bzw. den Wählhebel (2) in dieser Stellung fixiert und arretiert.

## Claims

1. Securing device for transporting and mounting a shift lever (2) of a gearbox for a motor vehicle, wherein a synthetic material component (5) which can be placed on one part of the shift lever unit (2) fixes / locks the shift lever (2) in a preferred position via at least one spring-elastic tongue (10),
**characterised in that**
- the synthetic material component (5) which can be placed on the shift lever unit (1) has a first detent catch (11), which is preferred for the transport and mounting of the shift lever unit (1) and from this detent catch (11) the shift lever (2) can be transferred into a second detent catch (13), which is preferred for the mounting / connection of the shift lever unit (2) with the connection elements to the gearbox and can be fixed and locked there.

2. Securing device for transporting and mounting a shift lever of a gearbox for a motor vehicle according to Claim 1,
**characterised in that**
- the synthetic material component (5) consists essentially of a base plate (6), on which two receiving pins (7 and 8) / a receiving point opening (9) are situated, which work directly with receiving points, which are provided for the mounting of a covering of the shift lever unit (2) and
- in the base plate a resilient tongue (10) is positioned neighbouring a cut-free recess (12), which has a first detent catch (11) for a first preferred position and wherein on the base plate (6) there is a second detent catch (13) for a second preferred position and a detent edge (14) on the resilient tongue (10), after reaching the second detent catch, (13) fixes and locks the shift lever (2) in this position.

## Revendications

1. Dispositif d'immobilisation pour le transport et le réglage pour un levier ou un sélecteur de vitesses (2) d'une boîte de vitesses d'un véhicule automobile, dans le cas duquel une pièce en matière plastique (5) pouvant être placée sur une partie du groupe (1) du levier ou du sélecteur de vitesses immobilise ou bloque le levier ou le sélecteur de vitesses (2) dans une position préférentielle par le biais d'au moins une languette faisant ressort (10), **caractérisé en ce que**
la pièce en matière plastique (5) pouvant être placée sur le groupe (1) du levier ou du sélecteur de vitesses présente une première encoche (11) à laquelle va la préférence pour le transport et le montage du groupe (1) du sélecteur de vitesses et à partir de laquelle le levier ou le sélecteur de vitesses (2) peut être mis dans une deuxième encoche (13) à laquelle va la préférence pour un réglage ou l'assemblage du groupe du sélecteur de vitesses (2) avec les éléments de liaison avec la boîte de vitesses, et peut y être immobilisé et bloqué.

2. Dispositif d'immobilisation pour le transport et le réglage d'un levier ou d'un sélecteur de vitesses d'une boîte de vitesses d'un véhicule automobile selon la revendication 1, **caractérisé en ce que**
- la pièce en matière plastique (5) est essentiellement composée d'une plaque de base (6) sur laquelle sont disposés deux broches (7 et 8) et un orifice (9) qui coopèrent directement avec des pendants prévus pour le montage d'un recouvrement du groupe (2) du levier ou du sélecteur de vitesses,
- et **en ce qu'**une languette faisant ressort (10) est située au voisinage d'un évidement découpé (12) comportant une première encoche (11) pour une première position préférentielle, sachant que sur la plaque de base (6) est prévue une deuxième encoche (13) pour une deuxième position préférentielle et qu'une arête d'enclenchement (14) sur la languette faisant ressort (10) immobilise et bloque le levier ou le sélecteur de vitesses (2) après que celui-ci a atteint la deuxième encoche (13).
